# EUROPEAN PATENT APPLICATION

(11) **EP 2 012 478 A1**
(43) Date of publication of application: **07.01.2009**
(21) Application number: 07742167.5
(22) Date of filing: 23.04.2007
(51) Int. Cl.: H04L 12/56

(54) **MULTICAST PACKET TRANSFER DEVICE, MULTICAST PACKET MANAGEMENT DEVICE, AND MULTICAST PACKET RECEPTION DEVICE**

(30) Priority: 21.04.2006 JP 2006117936
(71) Applicant: Panasonic Corporation, Kadoma-shi Osaka 571-8501 (JP)
(72) Inventor: KASAPIDIS, Makis, Panasonic Corporation IPROC, Chuo-ku, Osaka 540-6207 (JP)
(74) Representative: Grünecker, Kinkeldey, Stockmair & Schwanhäusser Anwaltssozietät
(86) International application number: PCT/JP2007/058732
(87) International publication number: WO 2007/123227

(57) **Abstract**

A technology is disclosed that can reduce delay time and multicast packet loss occurring when a reception side communication device using radio communication performs a handover, and actualize multicast technology taking into consideration mobility (particularly PIM-SM taking into consideration mobility). Based on the technology, when a reception side communication device (listener) 16 performing radio communication is in a state of receiving a multicast packet transmitted from a transmission source communication device (source) 11, via a rendezvous point (RP) 13 and a PIM-SM router 14, and the reception side communication device tries to perform a handover, the reception side communication device transmits a handover declaration message including identifying information of an access point to which the reception side communication device connects after the handover, to the PIM-SM router 14 to which the reception side communication device is currently connected. The PIM-SM router 14 acquires an address of a PIM-SM router 15 of a handover destination, based on the identifying information, inserts the address into a join message in PIM-SM, and transmits the join message to the RP. The RP establishes a multicast path to the PIM-SM router 15.

## Description

### TECHNICAL FIELD

The present invention relates to a multicast packet transfer device, a multicast packet management device, and multicast packet reception device for actualizing multicasting.

### BACKGROUND ART

Conventionally, as an efficient method of distributing packets including a same content to a large number of end nodes, there is a technology related to packet multicasting. In multicasting, basically, a packet transmitted from a transmitter (source) is duplicated to form a plurality of packets by a router (multicast router) on a path along the way. As a result, a plurality of end nodes (listeners) can receive the packets including the same content through a single packet transmission by the transmitter.

For example, in Non-patent Documents 1 and 2 below, a multicast listener discovery (MLD) technology is described. In MLD, a multicast router periodically broadcasts a multicast listener query message (subtype: general query) on a link. When an end node (user) connected to an access network tries to receive a multicast packet, the end node replies a multicast listener report message indicating the intention to join a multicast group to the multicast router, in response to the multicast listener query message. The multicast router adds the end node indicating the intention to join the multicast group to a list of the multicast group.

For example, when the multicast router receives a multicast listener done message indicating the intention to leave the multicast group (or periodically), the multicast router deletes the node indicating the intention to leave the list of the multicast group. In addition, the multicast router can check whether a receiver in the multicast group (a certain multicast address) is present through transmission of a multicast listener query message (subtype: multicast-address-specific-query).

On the other hand, as a more specific multicast protocol, a protocol referred to as protocol independent multicast-sparse mode (PIM-SM), described in Non-patent Document 3 below, is known. PIM-SM is a multicast protocol for efficiently performing communication when receivers in a multicast group are discretely dispersed.

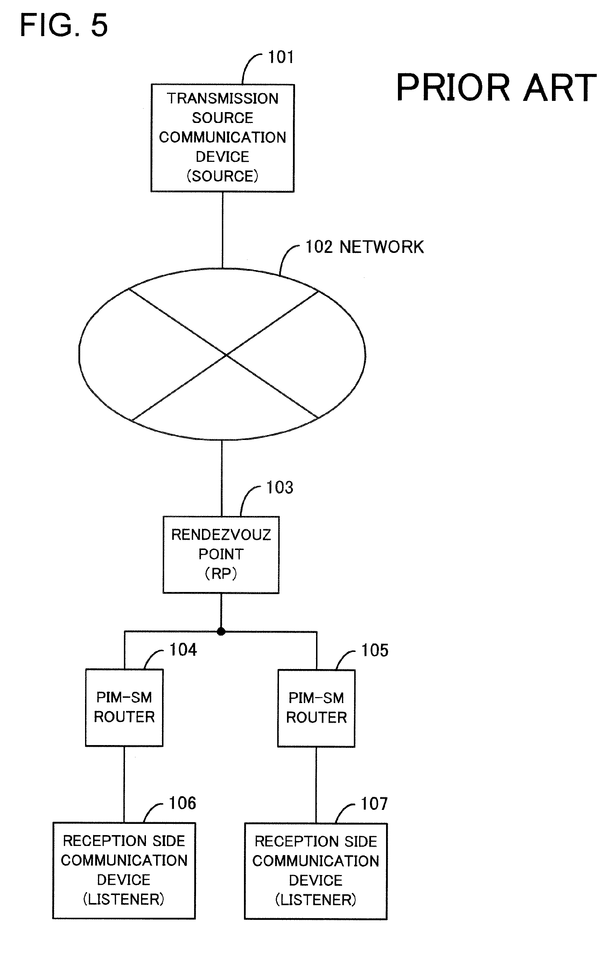

In PIM-SM, when an end node tries to join a certain multicast group, a following operation is performed. Fig. 5 is a diagram of an example of a network configuration configured such that an end node (reception side communication device) can join a multicast group, based on PIM-SM of a conventional technology.

A transmission source communication device (source) 101, a packet relay device (rendezvous point [RP]) 103, packet relay devices (PIM-SM routers) 104 and 105, and reception side communication devices (listeners) 106 and 107 are shown in Fig. 5. The source 101 functions as a transmitter of a multicast packet. The RP 103 transfers the multicast packet transmitted by the source 101 over a network 102 and functions as a rendezvous point that performs multicast path (multicast tree) management. The PIM-SM routers 104 and 105 receive the multicast packet transmitted from the source 101, via the RP 103. The reception side communication devices 106 and 107 are respectively connected to the PIM-SM routers 104 and 105, and function as receivers of the multicast packet.

For example, the reception side communication device 106 indicates the intention to join a certain multicast group to receive the multicast packet transmitted by the source 101, through MLD described above. At this time, the reception side communication device 106 transmits a multicast listener report message indicating the intention to join the certain multicast group to the PIM-SM router 104.

The PIM-SM router 104 can know an internet protocol (IP) address of the RP 103 in advance, in accordance to an operation prescribed by PIM-SM. The PIM-SM router 104 can also learn information related to a multicast group by MLD. The PIM-SM router 104 transmits information related to the multicast group to which the reception side communication device 106 is indicating the intention to join to the RP 103 by a join message. The RP 103 learns of the certain multicast group's presence through receiving the join message.

On the other hand, the multicast packet transmitted by the source 101 is sent to the RP 103 by, for example, any method of encapsulation and non-encapsulation from a designated router (not shown). The RP 103 receives the multicast packet transmitted via the designated router and transmits the multicast packet to the PIM-SM router 104. The PIM-SM router 104 receives the multicast packet and transmits the multicast packet to the reception side communication device 106 under the PIM-SM router 104 indicating the intention to join the multicast group. As a result, the reception side communication device 106 can receive the multicast packet.

For example, when listeners of the multicast packet are present in different sub-networks, the RP 103 performs reconfiguration of a multicast tree. The RP 103 also copies the multicast packet and transmits a plurality of the same multicast packet from different interfaces. For example, when a reception side communication device 107 that is a listener of the same multicast packet is present under the PIM-SM router 105, regarding the multicast group, the RP 103 configures a multicast tree to the PIM-SM router 104 and the PIM-SM router 105 and also transmits the multicast packet to the PIM-SM router 105 such that the reception side communication deice 107 can receive the multicast packet.

In multicast packet transmission, user datagram protocol (UDP) is ordinarily used. Compared to transmission control protocol (TCP), the UDP has a higher packet transmission speed. However, the UDP has lower reliability and does not particularly retransmit packets.
Non-Patent Document 1: S.Deering, W. Fenner and B. Haberman, "Multicast Listener Discovery (MLD) for IPv6", IETF RFC 2710, October 1999
Non-Patent Document 2: R. Vida, Ed., "Multicast Listener Discovery Version 2 (MLDv2) for IPv6", IETF RFC 3810, June 2004
Non-Patent Document 3: D. Estrin et al., "Protocol Independent Multicast-Sparse Mode (PIM-SM): Protocol Specification", IETF RFC 2362, June 1998

PIM-SM, described above, is an excellent technology for performing multicast management. However, there is an issue in that PIM-SM is does not support mobility. In other words, in recent years, reception side communication devices (for example, mobile personal computers [PC], personal digital assistants [PDA], and mobile phones) that access a network using radio communication technology are increasing. However, when these reception side communication devices perform a handover to change a connection base station, basically, multicast setting is required to be performed after the handover in the same manner as when a new connection is established. There is an issue in that time is required until the reception side communication device returns to a multicast communication state before the handover, after the handover. In particular, for example, when data (such as streaming video data) used in an application sensitive to delay and the like is distributed by multicasting, user experience may be affected.

When time is required to perform processes related to the handover, the multicast packet intended to reach the reception side communication device may become lost (packet loss may occur). In particular, because the UDP is mainly used to distribute the multicast packet, as described above, the multicast packet may not be retransmitted once the multicast packet is lost. In other words, the multicast packet itself can be considered to be a packet sensitive to delay.

### DISCLOSURE OF THE INVENTION

The present invention has been achieved in light of the above-described issues. An object of the present invention is to provide a multicast packet transfer device, a multicast packet management device, and a multicast packet reception device that actualizes multicasting that takes into consideration mobility, such as when a listener performs radio communication.

In order to achieve the object, a multicast packet transfer device of the present invention is a multicast packet transfer device that performs transfer of a multicast packet using PIM-SM. The multicast packet transfer device includes a multicast packet receiving means, a multicast packet transfer destination managing means, a multicast packet transmitting means, a handover declaration message receiving means, and a join message transmitting means. The multicast packet receiving means receives the multicast packet. The multicast packet transfer destination managing means manages a transfer destination of the multicast packet, and decides the transfer destination of the multicast packet based on a multicast address set to a destination address of the multicast packet. The multicast packet transmitting means transmits the multicast packet towards the transfer destination decided by the multicast packet transfer destination managing means. The handover declaration message receiving means receives a handover declaration message from a radio communication terminal that is a listener of the multicast packet, the handover declaration message including information stating that the radio communication terminal is trying to perform a handover. When the handover declaration message receiving means receives the handover declaration message, the join message transmitting means inserts information in a join message in PIM-SM, the information requesting establishment of a multicast path to a handover destination to which the radio communication terminal may possibly be trying to perform the handover, and transmits the join message to a rendezvous point managing the multicast path related to multicasting.
As a result of the above-described configuration, multicasting that takes into consideration mobility, such as when a listener performs radio communication, can be actualized. In the above-described configuration, in particular, when multicasting using PIM-SM supports mobility and a reception side communication device using radio communication performs a handover, a multicast path to a handover destination (or a plurality of handover destination candidates) can be established in advance. As a result, interruption in the reception of the multicast packet caused by the handover can be minimized, and a seamless handover can be actualized.

In addition to the above-described configuration, in the multicast packet transfer device of the present invention, when identifying information of the handover destination is inserted into the handover declaration message received from the radio communication terminal, identifying information of a multicast packet transfer device on the multicast path to the handover destination is acquired based on the identifying information of the handover destination, and the identifying information of the multicast packet transfer device on the multicast path to the handover destination is inserted into the join message as the information requesting establishment of the multicast path to the handover destination.
As a result of the above-described configuration, the multicast packet transfer device (PIM-SM router) can acquire the handover destination of the radio communication terminal based on information received from the radio communication terminal, and notify the multicast packet management device (rendezvous point).

In addition to the above-described configuration, in the multicast packet transfer device of the present invention, when identifying information of the handover destination is inserted into the handover declaration message received from the radio communication terminal, the identifying information of the handover destination extracted from the handover declaration message is inserted into the join message as the information requesting establishment of the multicast path to the handover destination.
As a result of the above-described configuration, the multicast packet transfer device can transfer information from the radio communication terminal to the multicast packet management device, the information allowing the handover destination of the radio communication terminal to be known.

In addition to the above-described configuration, in the multicast packet transfer device of the present invention, information stating that the handover destination is unknown is inserted into the join message as the information requesting establishment of the multicast path to the handover destination.
As a result of the above-described configuration, by the multicast packet transfer device giving notification that the handover destination of the radio communication terminal is unknown, the multicast packet management device can establish multicast paths to all multicast packet transfer devices that may possibly be the handover destination.

In addition to the above-described configuration, in the multicast packet transfer device of the present invention, identifying information of all multicast packet transfer devices that may possibly be selected by the radio communication terminal as a next handover destination is acquired, and the identifying information of all multicast packet transfer devices is inserted into the join message as the information requesting establishment of the multicast path to the handover destination.
As a result of the above-described configuration, the multicast packet management device can establish multicast paths to all sub-networks geographically adjacent to the multicast packet transfer device to which the radio communication terminal is currently connected and that may possibly be selected by the radio communication terminal as a next handover destination.

In order to achieve the object, a multicast packet management device of the present invention is a multicast packet management device that operates as a rendezvous point performing path management for multicast using PIM-SM. The multicast packet management device includes a multicast packet receiving means, a multicast packet transfer destination managing means, a multicast packet transmitting means, a join message receiving means, and a multicast path establishing means. The multicast packet receiving means receives a multicast packet. The multicast packet transfer destination managing means manages a transfer destination of the multicast packet and decides the transfer destination of the multicast packet based on a multicast address set to a destination address of the multicast packet. The multicast packet transmitting means transmits the multicast packet towards the transfer destination decided by the multicast packet transfer destination managing means. The join message receiving means receives a join message in PIM-SM from a multicast packet transfer device present on a multicast path related to the multicast, the join message to which information requesting establishment of another path related to the multicast is inserted. When the join message is received by the join message receiving means, the multicast path establishing means establishes the other path.
As a result of the above-described configuration, multicasting that takes into consideration mobility, such as when a listener performs radio communication, can be actualized. In the above-described configuration, in particular, when multicasting using PIM-SM supports mobility and a reception side communication device using radio communication performs a handover, a multicast path to a handover destination (or a plurality of handover destination candidates) can be established in advance. As a result, interruption in the reception of the multicast packet caused by the handover can be minimized, and a seamless handover can be actualized.

In addition to the above-described configuration, in the multicast packet management device of the present invention, when identifying information of a multicast packet transfer device differing from a transmission source of the join message is inserted into the join message received by the join message receiving means, a multicast path to the multicast packet transfer device differing from the transmission source of the join message is established.
As a result of the above-described configuration, the multicast packet management device can receive the identifying information of the multicast packet transfer device that is the handover destination of the radio communication device of which notification is given by the multicast packet transfer device, and establish a multicast path to the multicast packet transfer device.

In addition to the above-described configuration, in the multicast packet management device of the present invention, when identifying information of a handover destination to which a radio communication terminal that is a listener of the multicast packet is trying to perform a handover is inserted into the join message received by the join message receiving means, identifying information of a multicast packet transfer device on the multicast path to the handover destination is acquired based on the identifying information of the handover destination, and a multicast path to the multicast packet transfer device on the multicast path to the handover destination is established.
As a result of the above-described configuration, the multicast packet management device can receive information received from the radio communication terminal from the multicast packet management device, the information allowing the handover destination of the radio communication terminal to be known, acquire identifying information of the multicast packet management device corresponding to the handover destination, and establish a multicast path to the multicast packet management device.

In addition to the above-described configuration, in the multicast packet management device of the present invention, when information stating that a handover destination to which a radio communication terminal that is a listener of the multicast packet is trying to perform a handover is unknown is inserted into the join message received by the join message receiving means, identifying information of all multicast packet transfer devices that may possibly be selected as a next handover destination by a radio communication terminal receiving the multicast packet via a transmission source of the join message is acquired, and multicast paths to all multicast packet transfer devices are established.
As a result of the above-described configuration, when notification is received from the multicast packet transfer device that the handover destination of the radio communication terminal is unknown, the multicast packet management device can establish multicast paths to all sub-networks that may possibly be selected by the radio communication terminal under the multicast packet transfer device as a next handover destination.

In addition to the above-described configuration, in the multicast packet management device of the present invention, when identifying information of all multicast packet transfer devices that may possibly be selected as a next handover destination by a radio communication terminal receiving the multicast packet via a transmission source of the join message is inserted into the join message received by the join message receiving means, multicast paths to all multicast packet transfer devices are established.
As a result of the above-described configuration, the multicast packet management device can establish multicast paths to all sub-networks that are geographically adjacent to the multicast packet transfer device to which the radio communication terminal is currently connected and that may possibly be selected by the radio communication terminal as a next handover destination.

In order to achieve the object, a multicast packet reception device of the present invention is a multicast packet reception device that operates as a listener of a multicast packet using PIM-SM. The multicast packet reception device includes a multicast packet receiving means and a handover declaration message transmitting means. The multicast packet receiving means receives the multicast packet using radio communication. When a decision to perform a handover is made, the handover declaration message transmitting means transmits a handover declaration message to a multicast packet transfer device performing transfer of the multicast packet before the handover, such that the multicast packet can be promptly received after the handover, the handover declaration message including information stating that the handover is to be performed.
As a result of the above-described configuration, the multicast packet reception device that receives the multicast packet using radio communication can make a request to a network-side before actually performing a handover to allow the multicast packet to be promptly received upon connection after the handover.

In addition to the above-described configuration, in the multicast packet reception device of the present invention, identifying information of a destination of the handover is inserted as information stating that the handover is to be performed.
As a result of the above-described configuration, the multicast packet reception device that receives the multicast packet using radio communication can notify the network-side of a next handover destination.

The present invention is configured as described above. Delay time and multicast packet loss occurring when a reception side communication device using radio communication performs a handover can be reduced. A multicast technology taking into consideration mobility (particularly PIM-SM taking into consideration mobility) can be actualized.

### BRIEF DESCRIPTION OF THE DRAWINGS

Fig. 1 is a diagram of an example of a network configuration according to a first embodiment of the present invention;
Fig. 2 is a sequence chart of an example of an operation according to the first embodiment of the present invention;
Fig. 3 is a diagram of an example of a network configuration according to a second embodiment of the present invention;
Fig. 4 is a sequence chart of an example of an operation according to the second embodiment of the present invention; and
Fig. 5 is a diagram of an example of a network configuration configured such that an end node (reception side communication device) can join a multicast group, based on PIM-SM of a conventional technology.

### BEST MODE FOR CARRYING OUT THE INVENTION

First and second embodiments of the present invention will be described below.

### [First Embodiment]

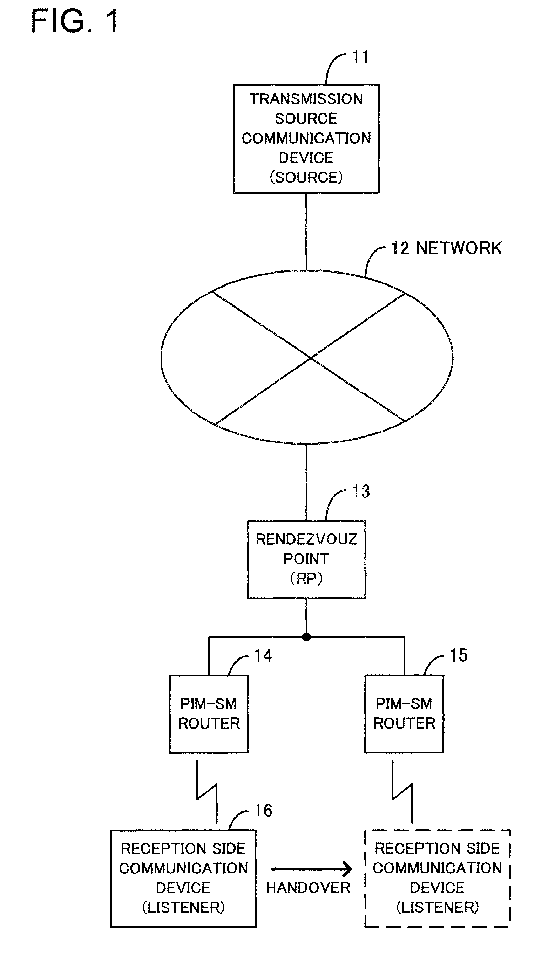

First, a first embodiment of the present invention will be described. A transmission source communication device (source) 11, a packet relay device (RP) 13, packet relay devices (PIM-SM routers) 14 and 15, and a reception side communication device (listener) 16 are shown in Fig. 1. The source 11 functions as a transmitter of a multicast packet. The RP 13 transfers the multicast packet transmitted by the source 11 over a network 12 and functions as a rendezvous point that performs multicast path (multicast tree) management. The PIM-SM routers 14 and 15 receive the multicast packet transmitted from the source 11, via the RP 13. The reception side communication device 16 is connected to the PIM-SM router 14 by radio communication and functions as a receiver of the multicast packet. The PIM-SM routers 14 and 15 belong to sub-networks geographically adjacent to each other.

Each network element within the network configuration shown in Fig. 1 is similar to that in the network configuration of the conventional technology shown in Fig. 5. However, according to the first embodiment of the present invention, PIM-SM has been modified. Network elements including PIM-SM (the RP13 and the PIM-SM routers 14 and 15) have an additional function. Moreover, the reception side communication device 16 is a radio communication terminal that performs radio communication and includes a protocol supporting mobility.

In the first embodiment of the present invention, a function is added to PIM-SM in which reconfiguration of a multicast tree caused by a handover of the reception side communication device 16 that is a listener is performed. For example, in the network configuration shown in Fig. 1, when the reception side communication device 16 performs a handover from a sub-network to which the PIM-SM router 14 belongs to a sub-network to which the PIM-SM router 15 belongs, information indicating that the reception side communication device 16 is performing the handover is inserted into a join message and transmitted from the PIM-SM router 14 to the RP 13.

Specifically, according to the first embodiment of the present invention, a field is prepared in a message format of the join message in PIM-SM for insertion of information (for example, an IP address of an access router to which the reception side communication device 16 connects after the handover or alternative identifying information) identifying the sub-network to which the reception side communication device 16 is trying to perform the handover.

Then, the PIM-SM router 14 that has identified the sub-network (here, the sub-network to which the PIM-SM router 15 belongs) to which the reception side communication device 16 is trying to perform the handover inserts the information identifying the sub-network into the join message and transmits the join message to the RP 13. The RP 13 that receives the join message extracts the information identifying the sub-network inserted into the join message. The RP 13 references the information and establishes a multicast path that allows the multicast packet to reach the sub-network.

As a result of the operation, when the reception side communication device 16 tries to perform a handover form a certain sub-network to another sub-network, the join message allowing the reception side communication device 16 to immediately receive the multicast packet after the handover is provided to the RP 13 from the sub-network side (the PIM-SM router 14) to which the reception side communication device 16 is connected before the handover. The RP 13 establishes the multicast path for receiving the multicast packet after the handover at a timing that is faster than an establishment timing of the multicast path in conventional PIM-SM.

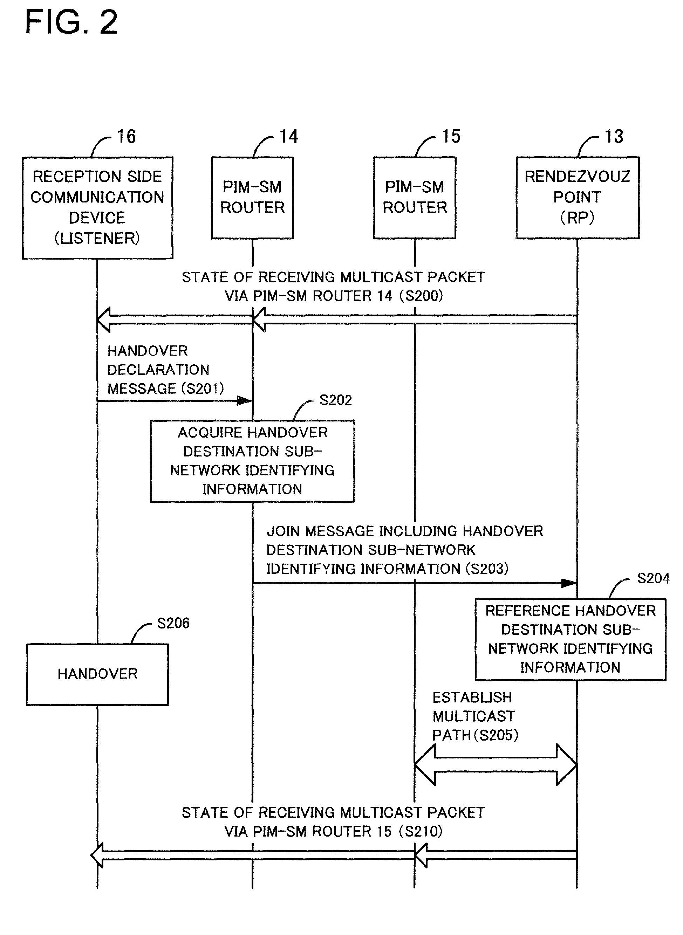

Hereafter, an example of an operation according to the first embodiment of the present invention will be described with reference to a sequence chart in Fig. 2. Fig. 2 is a sequence chart of the example of an operation according to the first embodiment of the present invention.

In Fig. 2, as an initial state, it is assumed that the reception side communication device 16 is in a state of receiving a certain multicast packet (Step S200). The multicast packet reaches the reception side communication device 16 via the RP 13 and the PIM-SM router 14. A multicast path from the RP 13 to the PIM-SM router 14 in the initial state can be established by a conventional technology.

When the reception side communication device 16, for example, discovers a different access point (an access point belonging to the sub-network to which the PIM-SM router 15 belongs) during movement and decides to perform a handover to the access point, the reception side communication device 16 transmits a handover declaration message to the PIM-SM router 14 to which the reception side communication device 16 is currently connected (Step S201). The handover declaration message declares that the reception side communication device 16 will perform a handover. The PIM-SM router 14 that receives the handover declaration message acquires the information (sub-network identifying information) identifying the sub-network of the handover destination to which the reception side communication device 16 is trying to perform the handover (Step S202). The PIM-SM router 14 then transmits the join message including the sub-network identifying information to the RP 13 (Step S203). The IP address of the access point in the sub-network of the handover destination to which the reception side communication device 16 is trying to perform the handover, prefix information of the sub-network, an IP address of the PIM-SM router 15 itself, and the like can be used as the sub-network identifying information.

As a method of acquiring the sub-network identifying information at Step S202, an arbitrary method can be used. For example, in a first example, the reception side communication device 16 can notify the PIM-SM router 14 of the identifying information (such as a layer 2 address [L2 address]) of the access point to which the reception side communication device 16 is trying to perform a next handover. The PIM-SM router 14 can analyze the sub-network of the handover destination to which the reception side communication device 16 is trying to perform the handover from the L2 address, and thereby acquire the sub-network identifying information. Notification of the L2 address can be included in its own message or included in a multicast listener report message of MLD. Moreover, if the reception side communication device 16 includes fast handovers for mobile IPv6 (FMIPv6), because the L2 address is included in a router solicitation for proxy advertisement message (RtsolPr message) in FMIPv6, the reception side communication device 16 can use the RtsolPr message instead of the handover declaration message. The reception side communication device 16 can also notify the PIM-SM router 15 of positional information (latitude and longitude) of the reception side communication device 16 rather than the L2 address of the access point. The PIM-SM router 15 can analyze the positional information and decide a next handover destination.

For example, in a second example, if the reception side communication device 16 can acquire the sub-network identifying information of the handover destination, the reception side communication device 16 can transmit the handover declaration message including the sub-network identifying information. This can be actualized, for example, when the reception side communication device 16 knows the correlation between the L2 address of the access point and the sub-network identifying information and can acquire the sub-network identifying information from the L2 address of the access point to which the reception side communication device 16 is trying to perform a next handover.

For example, as a third example, the reception side communication device 16 can transmit a handover declaration message that simply declares that the reception side communication device 16 is trying to perform a handover (a handover declaration message that does not include the L2 address of the handover destination and the sub-network identifying information). The PIM-SM router 14 can acquire the sub-network identifying information of the next handover destination of the reception side communication device 16 based on the handover declaration. This can be actualized, for example, when the handover of the reception side communication device 16 is performed under network-control (when a network-side specifies the handover destination to the reception side communication device 16 and makes the reception side communication device 16 perform the handover, and the like), when a movement path of the reception side communication device 16 is determined in advance and the next handover destination is limited to a single destination, and when the network-side tracks a position of the reception side communication device 16 and the network-side can know the next handover destination of the reception side communication device 16.

The RP 13 receives the join message transmitted from the PIM-SM router 14 at Step S203, and extracts the sub-network identifying information included in the join message and references the sub-network identifying information (Step S204). As a result, the RP 13 establishes a multicast path to the PIM-SM router 15 belonging to the sub-network such as to allow the multicast packet to reach the sub-network identified by the sub-network identifying information (Step S205). When a multicast path to the sub-network identified by the sub-network identifying information is already established in relation to the multicast group, the RP 13 is not required to perform furtherer multicast path establishment processes.

On the other hand, the reception side communication device 16 performs the handover to a desired access point (sub-network) at an arbitrary timing after transmission of the handover declaration message at Step S201 (Step S206). At this time, the reception side communication device 16 that has completed the handover is not required to perform a special process related to the multicast packet. The multicast packet desired by the reception side communication device 16 has already reached or will soon reach the sub-network to which the reception side communication device 16 is newly connected, via the PIM-SM router 15. The reception side communication device 16 can immediately receive the multicast packet while minimizing interruption in the reception of the multicast packet caused by the handover (Step S210).

After the reception side communication device 16 completes the handover, the multicast path from the RP 13 to the PIM-SM router 14 established before the handover may become unnecessary. Regarding unnecessary multicast paths such as this, the multicast path can be actively deleted by the RP 13 or passively deleted by time-out and the like.

In the operation example described above, the PIM-SM router 14 acquires the sub-network identifying information of the handover destination based on the information included within the handover declaration message. However, the PIM-SM router 14 can insert the information included within the handover declaration message into the join message as is and transfer the join message to the RP 13. The RP 13 can then acquire the sub-network identifying information of the handover destination based on the information included within this handover declaration message.

As described above, according to the first embodiment of the present invention, when multicasting using PIM-SM supports mobility and the reception side communication device 16 using radio communication performs a handover, the multicast path to the handover destination can be established in advance. Therefore, interruption in the reception of the multicast packet caused by the handover can be minimized and a seamless handover can be actualized.

### <Second Embodiment>

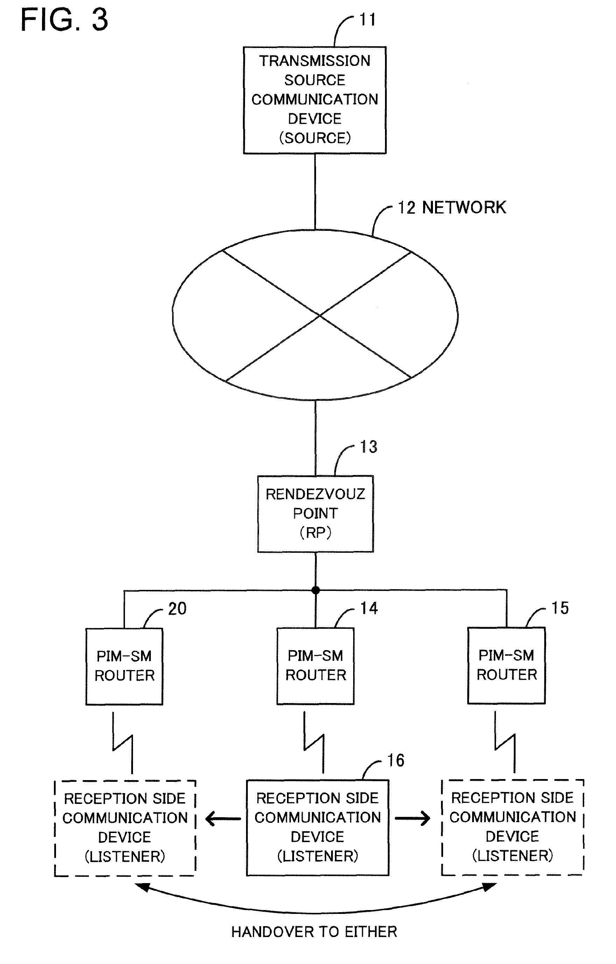

Next, a second embodiment of the present invention will be described. Fig. 3 is a diagram of an example of a network configuration according to a second embodiment of the present invention. The transmission source communication device (source) 11, the packet relay device (RP) 13, a plurality of packet relay devices (PIM-SM routers) 14, 15, and 20, and the reception side communication device (listener) 16 are shown in Fig. 3. The source 11 functions as a transmitter of a multicast packet. The RP 13 transfers the multicast packet transmitted by the source 11 over a network 12 and functions as a rendezvous point that performs multicast path (multicast tree) management. The PIM-SM routers 14, 15, and 20 receive the multicast packet transmitted from the source 11, via the RP 13. The reception side communication device 16 is connected to the PIM-SM router 14 by radio communication and functions as a receiver of the multicast packet. The plurality of PIM-SM routers 15 and 20 belong to sub-networks geographically adjacent to the sub-network of the PIM-SM router 14. Three or more sub-networks may be geographically adjacent to the sub-network of the PIM-SM router 14. However, in Fig. 3, the PIM-SM routers 15 and 20 respectively belonging to two sub-networks are given as examples and described.

A most significant difference between the first embodiment and the second embodiment of the present invention is that the PIM-SM router 14 to which the reception side communication device 16 is currently connected or the RP 13 holds geographic information used to know the PIM-SM routers 15 and 20 belonging to all sub-networks (all sub-networks to which the reception side communication device 16 may possibly be connected after the next handover) geographically adjacent to the PIM-SM router 14.

According to the first embodiment of the present invention, the PIM-SM router 14 can acquire the sub-network identifying information indicating the handover destination of the reception side communication device 16. The RP 13 that receives the notification of the sub-network identifying information establishes the multicast path to a certain sub-network (the sub-network of the handover destination of the reception side communication device 16). However, according to the second embodiment of the present invention, interruption in the reception of the multicast packet caused by the handover can be minimized when the handover destination of the reception side communication device 16 is unknown.

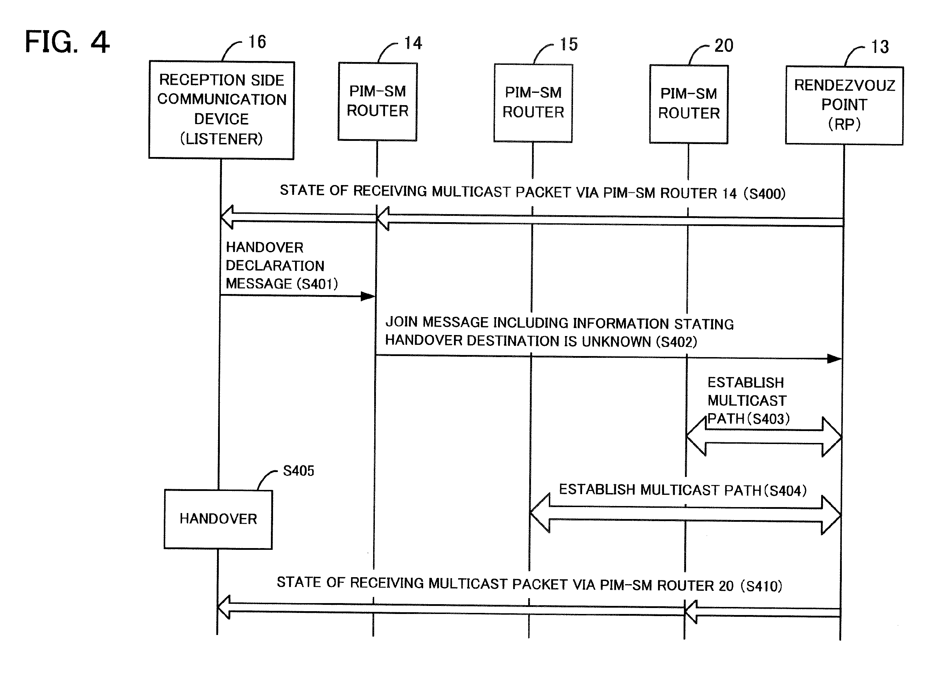

Hereafter, an example of an operation according to the second embodiment of the present invention will be described with reference to a sequence chart in Fig. 4. Fig. 4 is a sequence chart of the example of an operation according to the second embodiment of the present invention.

As in Fig. 2, in Fig. 4, as an initial state, it is assumed that the reception side communication device 16 is in a state of receiving a certain multicast packet (Step S400). The multicast packet reaches the reception side communication device 16 via the RP 13 and the PIM-SM router 14. The multicast path from the RP 13 to the PIM-SM router 14 in the initial state can be established by a conventional technology.

When the reception side communication device 16, for example, discovers a different access point during movement and decides to perform a handover to the access point, the reception side communication device 16 transmits a handover declaration message declaring that the reception side communication device 16 will perform a handover (Step S401). Here, unlike the handover declaration message according to the first embodiment of the present invention, the handover declaration message is assumed to simply declare that the reception side communication device 16 will perform a handover. However, the reception side communication device 16 can transmit the handover declaration message including the L2 address and the sub-network identifying information described according to the first embodiment of the present invention.

Because the handover declaration message simply includes a declaration that the reception side communication device 16 will perform a handover, the PIM-SM router 14 that receives the handover declaration message transmits a join message including information stating that the handover destination is unknown to the RP 13 (Step S402). The information stating that the handover destination is unknown included in the join message can be actualized by an arbitrary form. For example, a predetermined flag can be set within the join message. Alternatively, a predetermined value can be set in the field in which the sub-network identifying information is intended to be included.

According to the first embodiment, when the PIM-SM router 14 fails to acquire the sub-network identifying information (when the sub-network identifying information cannot be acquired at Step S202 in Fig. 2), the operation can proceed to processes according to the second embodiment of the present invention (processes subsequent to Step S402 in Fig. 4).

The RP 13 receives the join message transmitted from the PIM-SM router 14 at Step S402 and knows that the handover destination is unknown through the join message. In this case, the RP 13 references geographical information held by the RP 13 itself and finds out the PIM-SM routers 15 and 20 geographically adjacent to the PIM-SM router 14 that is the transmission source of the join message. The RP 13 establishes multicast paths to each PIM-SM router 15 and 20 (Step S403 and Step S404). Similar to that according to the first embodiment, regarding the multicast group, when the multicast paths to the sub-networks to which the PIM-SM routers 15 and 20 respectively belong are already established, the RP 13 is not required to perform further multicast path establishing processes.

On the other hand, the reception side communication device 16 performs the handover to a desired access point (sub-network) at an arbitrary timing after transmission of the handover declaration message at Step S401 (Step S405). At this time, the reception side communication device 16 that has completed the handover is not required to perform a special process related to the multicast packet. Here, for example, the reception side communication device 16 performs the handover to a sub-network to which the PIM-SM router 20 belongs. In this case, the multicast packet desired by the reception side communication device 16 has already reached or will soon reach the sub-network to which the reception side communication device 16 is newly connected, via the PIM-SM router 20. The reception side communication device 16 can immediately receive the multicast packet while minimizing interruption in the reception of the multicast packet caused by the handover (Step S410).

After the reception side communication device 16 completes the handover, the multicast path from the RP 13 to the PIM-SM router 14 established before the handover and the multicast path to the PIM-SM router (PIM-SM router 15 in the above-described example) to which the reception side communication device 16 ultimately did not perform the handover may become unnecessary. Regarding unnecessary multicast paths such as these, the multicast path can be actively deleted by the RP 13 or passively deleted by time-out and the like.

In the operation example described above, the RP 13 holds the geographical information and knows the PIM-SM routers 15 and 20 adjacent to the PIM-SM router 14 to which the reception side communication device 16 is currently connected. However, the PIM-SM router 14 can hold the geographical information. The sub-network identifying information (sub-network information identifying all adjacent sub-networks), such as the IP addresses of the adjacent PIM-SM routers 15 and 20 known by the PIM-SM router 14, a prefix of the sub-network, and the like, can be inserted into the join message, and the RP 13 can be notified of the join message.

As described above, according to the second embodiment of the present invention, when multicasting using PIM-SM supports mobility and a reception side communication device using radio communication performs a handover, multicast paths to all handover destinations to which the reception side communication device may possibly connect after the handover can be established in advance. Therefore, interruption in the reception of the multicast packet caused by the handover can be minimized and a seamless handover can be actualized.

The operations according to the first embodiment and the second embodiment of the present invention described above can be actualized by a central processing unit (CPU) executing software (program), or a combination of software and hardware.

### INDUSTRIAL APPLICABILITY

The present invention achieves effects of reducing delay time and multicast packet loss occurring when a reception side communication device using radio communication performs a handover, and actualizing a multicast technology taking into consideration mobility (particularly PIM-SM taking into consideration mobility). The present invention can be applied to multicast technology (particularly technology related to PIM-SM) and mobility technology.

## Claims

1. A multicast packet transfer device that performs transfer of a multicast packet using PIM-SM, the multicast packet transfer device comprising:
a multicast packet receiving means that receives the multicast packet;
a multicast packet transfer destination managing means that manages a transfer destination of the multicast packet, and decides the transfer destination of the multicast packet based on a multicast address set to a destination address of the multicast packet;
a multicast packet transmitting means that transmits the multicast packet towards the transfer destination decided by the multicast packet transfer destination managing means;
a handover declaration message receiving means that receives a handover declaration message from a radio communication terminal that is a listener of the multicast packet, the handover declaration message including information stating that the radio communication terminal is trying to perform a handover; and
a join message transmitting means that, when the handover declaration message receiving means receives the handover declaration message, inserts information in a join message in PIM-SM, the information requesting establishment of a multicast path to a handover destination to which the radio communication terminal may possibly be trying to perform the handover, and transmits the join message to a rendezvous point managing the multicast path related to multicasting.

2. The multicast packet transfer device according to claim 1, wherein, when identifying information of the handover destination is inserted into the handover declaration message received from the radio communication terminal, identifying information of a multicast packet transfer device on the multicast path to the handover destination is acquired based on the identifying information of the handover destination, and the identifying information of the multicast packet transfer device on the multicast path to the handover destination is inserted into the join message as the information requesting establishment of the multicast path to the handover destination.

3. The multicast packet transfer device according to claim 1, wherein, when identifying information of the handover destination is inserted into the handover declaration message received from the radio communication terminal, the identifying information of the handover destination extracted from the handover declaration message is inserted into the join message as the information requesting establishment of the multicast path to the handover destination.

4. The multicast packet transfer device according to claim 1, wherein information stating that the handover destination is unknown is inserted into the join message as the information requesting establishment of the multicast path to the handover destination.

5. The multicast packet transfer device according to claim 1, wherein identifying information of all multicast packet transfer devices that may possibly be selected by the radio communication terminal as a next handover destination is acquired, and the identifying information of all multicast packet transfer devices is inserted into the join message as the information requesting establishment of the multicast path to the handover destination.

6. A multicast packet management device that operates as a rendezvous point performing path management for multicast using PIM-SM, the multicast packet management device comprising:
a multicast packet receiving means that receives a multicast packet;
a multicast packet transfer destination managing means that manages a transfer destination of the multicast packet, and decides the transfer destination of the multicast packet based on a multicast address set to a destination address of the multicast packet;
a multicast packet transmitting means that transmits the multicast packet towards the transfer destination decided by the multicast packet transfer destination managing means;
a join message receiving means that receives a join message in PIM-SM from a multicast packet transfer device present on a multicast path related to the multicast, the join message to which information requesting establishment of another path related to the multicast is inserted; and
a multicast path establishing means that, when the join message is received by the join message receiving means, establishes the other path.

7. The multicast packet management device according to claim 6, wherein, when identifying information of a multicast packet transfer device differing from a transmission source of the join message is inserted into the join message received by the join message receiving means, a multicast path to the multicast packet transfer device differing from the transmission source of the join message is established.

8. The multicast packet management device according to claim 6, wherein, when identifying information of a handover destination to which a radio communication terminal that is a listener of the multicast packet is trying to perform a handover is inserted into the join message received by the join message receiving means, identifying information of a multicast packet transfer device on the multicast path to the handover destination is acquired based on the identifying information of the handover destination, and a multicast path to the multicast packet transfer device on the multicast path to the handover destination is established.

9. The multicast packet management device according to claim 6, wherein, when information stating that a handover destination to which a radio communication terminal that is a listener of the multicast packet is trying to perform a handover is unknown is inserted into the join message received by the join message receiving means, identifying information of all multicast packet transfer devices that may possibly be selected as a next handover destination by a radio communication terminal receiving the multicast packet via a transmission source of the join message is acquired, and multicast paths to all multicast packet transfer devices are established.

10. The multicast packet management device according to claim 6, wherein, when identifying information of all multicast packet transfer devices that may possibly be selected as a next handover destination by a radio communication terminal receiving the multicast packet via a transmission source of the join message is inserted into the join message received by the join message receiving means, multicast paths to all multicast packet transfer devices are established.

11. A multicast packet reception device that operates as a listener of a multicast packet using PIM-SM, the multicast packet reception device comprising:
a multicast packet receiving means that receives the multicast packet using radio communication; and
a handover declaration message transmitting means that, when a decision to perform a handover is made, transmits a handover declaration message to a multicast packet transfer device performing transfer of the multicast packet before the handover, such that the multicast packet can be promptly received after the handover, the handover declaration message including information stating that the handover is to be performed.

12. The multicast packet reception device according to claim 11, wherein identifying information of a destination of the handover is inserted as information stating that the handover is to be performed.
